# FASCICULE DE BREVET EUROPEEN

(11) **EP 0 989 017 B1**
(45) Date de publication et mention de la délivrance du brevet: **14.11.2007**
(21) Numéro de dépôt: 99402311.7
(22) Date de dépôt: 22.09.1999
(51) Int. Cl.: B60N 2/00

(54) **Fixation de glissières de sièges sur le plancher d'un véhicule automobile**
Halterung von Sitzgleitschienen auf dem Boden eines Kraftfahrzeuges
Fixing of seat tracks on the frame of a motor vehicle

(30) Priorité: 22.09.1998 FR 9811794
(43) Date de publication de la demande: 29.03.2000
(73) Titulaire: AUTOMOBILES PEUGEOT, 75116 Paris (FR); AUTOMOBILES CITROEN, 92200 Neuilly-sur-Seine (FR)
(72) Inventeur: Faivre, Philippe, 75014 Paris (FR)
(74) Mandataire: Gendraud, Pierre

(56) Documents cités:
- EP-A- 0 680 842
- WO-A-97/19727
- FR-A- 2 545 767
- FR-A- 2 629 400
- US-A- 5 382 082
- US-E- R E35 485

## Description

L'invention se rapporte à un procédé de fixation de glissières de sièges sur un élément de structure du plancher d'un véhicule automobile, ainsi qu'à une cale de fixation de mise en oeuvre du procédé.

Les silhouettes des véhicules automobiles sont de plus en plus variées (berline, break, cabriolet, monospace,...). Pour des raisons d'ergonomie, à chaque type de silhouette de véhicule correspondent des valeurs optimales de hauteur d'assise sur les sièges avants et d'inclinaison des glissières de ces sièges par rapport au plancher; la hauteur d'assise étant la cote mesurée entre le point théorique où est située l'articulation de sa hanche, ou point hanche.

Ainsi, plus la hauteur d'assise est importante sur un véhicule (monospace par exemple), plus la ligne sur laquelle se déplacent les points hanche doit être parallèle au plancher. Inversement, pour des hauteurs d'assise plus réduites (berline, cabriolet,...), les glissières des sièges doivent être inclinée vers le haut en direction de l'avant du siège, ceci avec un angle de quelques degrés.

La hauteur d'assise et l'inclinaison des glissières des sièges sont déterminées par la structure du plancher du véhicule. Ainsi, pour chaque type de silhouette de véhicule, il est connu de prévoir une structure de plancher particulière, apte à satisfaire les exigences de hauteur d'assise et d'inclinaison des glissières. Les extrémités des glissières des sièges sont fixées classiquement sur la structure de planchers de véhicule, par des moyens de fixation du type boulon-écrou.

Le document FR 2 545 767 décrit un tel dispositif de fixation de glissières de sièges sur un plancher de véhicule. Ce dispositif comprend l'application d'une monture solidaire de la face inférieure de l'élément de glissière fixe. La monture possède une paire de mâchoires destinées à enserrer au moins une paroi de plancher, la mâchoire inférieure portant un écrou de fixation, la mâchoire supérieure étant pourvue d'un orifice de passage d'un boulon destiné à coopérer avec l'écrou.

Le document US RE35485 décrit une armature de montage d'un siège de véhicule adaptée pour pouvoir être fixée à des glissières de types différents. Selon ce mécanisme, les glissières sont fixées directement sur la structure, et une pièce d'écartement est disposée entre l'armature et la glissière.

Cependant, pour des raisons de rationalisation et d'économie, on souhaite produire des véhicules de silhouettes différentes ayant un maximum d'éléments communs, et en particulier ayant la même structure de plancher, tout en satisfaisant les exigences différentes en ce qui concerne notamment l'inclinaison des glissières des sièges.

Un but de la présente invention est de proposer un procédé de fixation de glissières de sièges sur un élément de structure du plancher d'un véhicule automobile, permettant de donner aux glissières une inclinaison déterminée par rapport au plancher et conforme à la silhouette du véhicule, ceci, quelle que soit la structure du plancher du véhicule.

Ce but est atteint par le fait que le procédé de fixation de glissières de sièges sur un élément de structure du plancher d'un véhicule automobile, consiste à utiliser au moins une monture ou cale de fixation, fixée d'une part sur la partie fixe de la glissière et d'autre part sur l'élément de structure du plancher, en en fonction du type de véhicule et/ou en fonction de la structure du plancher de ce dernier, on sélectionne des cales conformées pour maintenir les glissières avec une inclinaison déterminée par rapport au plancher.

Selon une autre particularité on utilise au moins une cale de fixation par glissière, chaque cale étant située sensiblement au niveau de l'une des extrémités de la partie fixe de la glissière.

Selon une autre particularité, pour des véhicules de types différents ayant des structures de plancher sensiblement identiques, on sélectionne des cales de fixation choisies parmi une pluralité de types de cales, aptes respectivement à donner aux glissières des inclinaisons différentes par rapport au plancher.

Selon une autre particularité les différents types de cales sont aptes à donner aux glissières des inclinaisons sensiblement égales respectivement à environ 6,3 degrés, ou 4,3 degrés ou zéro degrés par rapport au plancher.

Un autre but de la présente invention est de proposer une cale de fixation de glissière de siège de mise en oeuvre du procédé.

Ce but est atteint par le fait que la cale de fixation de mise en oeuvre du procédé est constituée d'une pièce métallique ayant sensiblement la forme d'un U dont les extrémités libres des deux branches du U sont pliées vers l'extérieur du U dans des directions opposées, pour former respectivement deux pattes destinées à être fixées sur l'élément de glissière fixe, la base du U formé par la cale étant fixée sur l'élément de structure du plancher du véhicule.

Selon une autre particularité la base du U formé par la cale de fixation comporte un orifice prévu pour le passage de la vis d'un ensemble vis-écrou de fixation sur l'élément de structure du plancher, les deux pattes formées par les extrémités pliées de la cale étant soudées sur l'élément de glissière fixe.

D'autres caractéristiques et avantages de l'invention apparaîtront à la lecture de la description détaillée qui va suivre, pour la compréhension de laquelle on se reportera aux dessins annexés, dans lesquels :
- la figure 1 représente une vue schématique de côté d'une glissière de siège fixée sur une structure de plancher d'un véhicule conformément à l'invention, avec une première inclinaison par rapport au plancher,
- la figure 2 représente une vue schématique de côté d'une glissière de siège fixée sur une structure de plancher d'un véhicule conformément à l'invention, avec une seconde inclinaison par rapport au plancher,
- la figure 3 représente une vue schématique de côté d'une glissière de siège fixée sur une structure de plancher d'un véhicule conformément à l'invention, avec une troisième inclinaison par rapport au plancher,
- la figure 4 représente une vue en perspective d'une cale de fixation d'une glissière de siège conforme à l'invention,
- la figure 5 représente une vue schématique de côté dans laquelle sont superposées les trois cales de fixation de l'avant de la glissière, représentées respectivement aux figures 1 à 3.

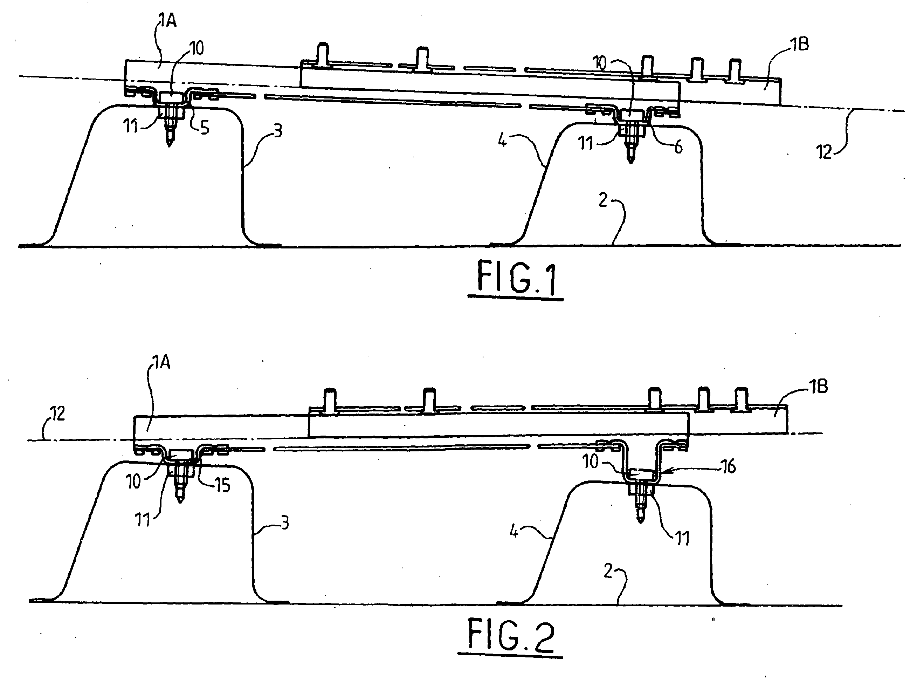

La figure 1 représente une glissière 1A, 1B de siège avant, qui est fixée sur une structure de plancher d'un véhicule conformément à l'invention. Par soucis de simplification, ni la seconde glissière ni le siège ne sont représentés, cependant, la description qui va suivre s'applique symétriquement à la seconde glissière non représentée. La glissière de siège est constituée d'un premier profilé fixe 1A dans lequel coulisse un second profilé mobile 1B et solidaire du siège. Les deux extrémités de la partie fixe 1A de la glissière 1A, 1B de siège sont fixées respectivement sur les faces supérieures de deux traverses 3, 4 supports montées sur le plancher 2 du véhicule.

Dans cet exemple de réalisation non limitatif, la traverse avant 3, qui supporte l'extrémité avant de la glissière 1A, est plus haute par rapport au plancher 2 que la transverse arrière 4. Chacune des extrémités de la partie fixe 1A de la glissière 1A, 1B est fixée sur sa transverse 3, 4 respective au moyen d'une monture ou cale 5, 6.

Selon l'invention, en fonction du type de véhicule et/ou en fonction de la structure du plancher 2, 3, 4 de ce dernier, on sélectionne des cales 5, 6 de formes déterminées, pour maintenir les glissières 1A, 1B avec une inclinaison donnée par rapport au plancher 2.

C'est-à-dire que, pour des véhicules ayant des silhouettes différentes et des structures de plancher 2, 3, 4 sensiblement identiques, on sélectionne des cales de fixation choisies parmi une pluralité de types de cales, pour donner aux glissières 1A, 1B des inclinaisons par rapport au plancher 2 compatibles avec les exigences d'ergonomie des différents types de véhicules.

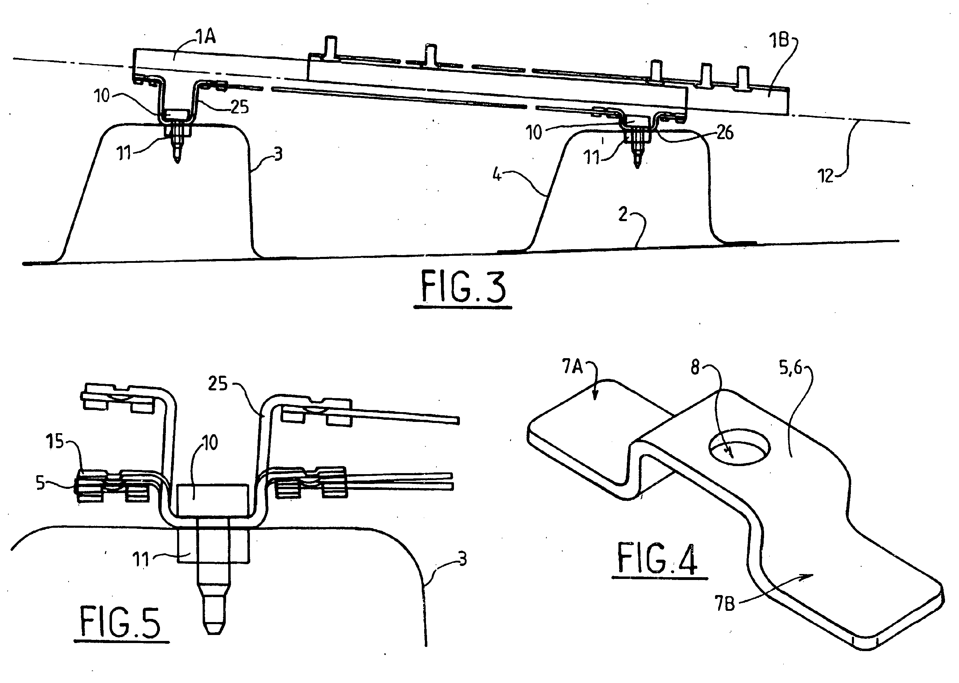

Les deux cales 5, 6 de fixation respectivement des extrémités avant et arrière de la partie fixe 1A de la glissière sont constituée chacune d'une pièce métallique pliée sensiblement en forme de U (figure 4). Les extrémités libres des deux branches du U sont elles mêmes pliées sensiblement à angle droit vers l'extérieur du U, dans des directions opposées, pour former respectivement deux pattes 7A, 7B. Ces deux pattes 7A, 7B sont fixées sur l'élément de glissière fixe 1A, tandis que la base du U formé par la cale 5, 6 est fixée sur l'élément de structure 2, 3, 4 du plancher. Par exemple, les deux pattes 7A, 7B formées par les extrémités pliées de la cale 5, 6 peuvent être soudées sur l'élément de glissière fixe 1A.

La base du U formé par la cale de fixation 5, 6 peut comporter quant à elle un orifice 8 prévu pour le passage de la vis 10 d'un ensemble vis 10-écrou 11 de fixation sur l'élément de structure du plancher. La tête de la vis 10 est disposées à l'intérieur du U formé par la cale 5, 6, sur la paroi formant la base du U. L'écrou 11 est vissé sur l'extrémité de la vis 10 qui fait saillie à l'intérieur de la traverse 3, 4.

Dans l'exemple de réalisation de la figure 1 les cales de fixation avant 5 et arrière 6 de la glissière 1A, 1B sont sensiblement identiques et conformées pour maintenir la glissière 1A, 1B sur les traverses 3, 4 avec une inclinaison d'environ 6 % par rapport au plancher, c'est-à-dire environ 4,34 degrés par rapport au plancher 2. Ainsi, l'axe de coulissement 12 de la partie mobile 1B de la glissière est incliné de 4,34 degrés vers le haut, dans la direction arrière-avant, par rapport à la surface du plancher 2.

Pour des raisons d'ergonomie, cette inclinaison de 6 % (4,34 degrés) est adaptée à des hauteurs d'assises moyennes, que l'on retrouve dans des véhicules de type berline ou dans certains breaks.

L'inclinaison résulte de la forme des cales 5, 6 et de la différence de hauteur entre les traverses avant 3 et arrière 4 de la structure 2, 3, 4 du plancher du véhicule. Bien entendu, dans le cas où les traverses 3, 4 ont des hauteurs relatives différentes de celles représentés à la figure 1, on utilisera des cales de formes différentes, aptes à obtenir cette même inclinaison de 6 % par rapport au plancher 2.

La figure 2 représente une variante de réalisation de l'invention sur la même structure 2, 3, 4 de plancher que celle de la figure 1. Les éléments identiques à ceux décrits ci-dessus sont désignés par les mêmes références numériques.

Dans cette variante de réalisation, les cales avant 15 et arrière 16 ont des formes différentes de façon que la glissière 1A, 1B soit sensiblement parallèle au plancher 2. C'est-à-dire que l'axe de coulissement 12 de la partie mobile de la glissière a une inclinaison nulle ou quasi nulle par rapport au plancher 2. Cette configuration est particulièrement adaptée aux véhicules ayant une grande hauteur d'assise tels que les véhicules du type monospace.

Pour cela, la cale 16 de fixation de l'arrière de la glissière 1A a une hauteur supérieure à celle de la cale 15 avant, pour compenser la différence de hauteur entre les traverses avant 3 et arrière 4. En particulier, les deux branches parallèles du U de la cale 16 arrière sont plus longues que celles de la cale 15 avant. Par ailleurs, les cales avant 15 et arrière 16 peuvent être légèrement dissymétriques pour assurer une bonne orientation de la glissière 1A, 1B. C'est-à-dire que les branches parallèles du U formé par la cale 15, 16 peuvent avoir des longueurs très légèrement différentes et/ou peuvent être légèrement inclinées par rapport à un plan perpendiculaire à la base du U. De la même façon, les pattes 7A, 7B de fixation de la cale 15, 16 peuvent être pliées de manière sensiblement dissymétriques, en vue d'assurer précisément cette inclinaison de la glissière 1A, 1B.

La figure 3 représente une autre variante de réalisation de l'invention dans laquelle la glissière 1A, 1B est fixée sur la même structure 2, 3, 4 de plancher que celle des figures 1 et 2. Dans cette variante les cales avant 25 et arrière 26 sont choisies de façon que la glissière 1A, 1B soit inclinée d'environ 11 % par rapport au plancher 2, c'est-à-dire environ 6,28 degrés par rapport au plancher 2. Ainsi, l'axe de coulissement 12 de la glissière 1A, 1B est incliné de 6,28 degrés vers le haut, dans la direction arrière-avant, par rapport à la surface du plancher 2. Cette configuration est adaptée, pour des raisons d'ergonomie, aux véhicules ayant une faible hauteur d'assise tels que les véhicules du type cabriolet, coupé sport et certaines berlines ou breaks.

Cette valeur d'inclinaison de la glissière 1A, 1B est obtenue par la différence relative de hauteur entre les traverses avant 3 et arrière 4 et par le fait que la cale 25 avant est plus haute que la cale 26 arrière. De la même façon que mentionné ci-dessus en référence à la figure 2, les cales 25, 26 peuvent être dissymétriques.

La figure 5 représente une superposition schématique des trois cales de fixation 5, 15, 25 de l'avant de la glissière 1A, 1B, illustrées respectivement aux figures 1 à 3.

La figure 5 met en évidence le fait que les cales 5, 15 des modes de réalisations des figures 1 et 2 ont sensiblement la même taille et diffèrent par le fait que les paires de pattes 7A, 7B respectives sont situés dans des plans différents. La cale 25 avant du mode de réalisation de la figure 3 a quant elle une hauteur supérieure aux deux autres cales représentées 5, 15. Cette cale est par ailleurs dissymétrique, de façon que les deux pattes 7A, 7B de fixation soient situées dans un plan légèrement incliné vers le plancher en direction de l'arrière.

Le dispositif de fixation de glissières de sièges selon l'invention, tout en étant d'une grande simplicité, permet de donner aux glissières 1A, 1B des inclinaisons par rapport au plancher 2 compatibles avec les exigences d'ergonomie des différents types de véhicules, ceci même lorsque ces différents types de véhicule on une structure de plancher identique. De plus, on conçoit aisément que la hauteur des cales peut être choisie pour déterminer la hauteur d'assise du siège.

Bien entendu, l'invention ne saurait se limiter aux exemples de réalisation décrits ci-dessus. Ainsi, en variante il est possible de prévoir que l'une seulement des extrémités de la partie fixe 1A de la glissière soit fixée au moyen d'une cale conforme à l'invention. Dans ce cas, l'autre extrémité de la partie fixe de la glissière 1A peut être fixée sur la structure de plancher au moyen d'une monture de l'art antérieur, une cale en plastique de type connu, ou de tout autre moyen équivalent.

Par ailleurs, l'invention peut s'appliquer pour tout autre forme de structure de plancher que celle représentée aux figures 1 à 3.

Enfin, bien que l'invention ait été décrite en liaison avec des modes de réalisation particuliers, elle comprend tous les équivalents techniques des moyens décrits.

## Revendications

1. Procédé de fixation de glissières (1A, 1B) de sièges sur un élément de structure (2, 3, 4) du plancher d'un véhicule automobile, consistant à utiliser au moins une monture ou cale (5, 6) de fixation, fixée d'une part sur la partie fixe (1A) de la glissière et d'autre part sur l'élément de structure (2, 3, 4) du plancher, **caractérisé en ce qu'**en en fonction du type de véhicule et/ou en fonction de la structure du plancher (2) de ce dernier, on sélectionne des cales (5, 6) conformées pour maintenir les glissières (1A, 1B) avec une inclinaison déterminée par rapport au plancher (2) dans une direction parallèle aux axes longitudinaux des glissières, l'inclinaison étant ergonomiquement adaptée au type du véhicule.

2. Procédé de fixation de glissières (1A, 1B) de sièges selon la revendication 1, **caractérisé en ce qu'**on utilise au moins une cale (5, 6) de fixation par glissière (1A, 1B), chaque cale (5, 6) étant située sensiblement au niveau de l'une des extrémités de la partie fixe (1A) de la glissière.

3. Procédé de fixation de glissières (1A, 1B) de sièges selon la revendication 1 ou 2, **caractérisé en ce que**, pour des véhicules de types différents ayant des structures de plancher (2, 3, 4) sensiblement identiques, on sélectionne des cales de fixation (5, 6) choisies parmi une pluralité de types de cales (5, 6), aptes respectivement à donner aux glissières (1A, 1B) des inclinaisons différentes par rapport au plancher (2).

4. Procédé de fixation de glissières (1A, 1B) de sièges selon la revendication 3, **caractérisé en ce que** les différents types de cales (5, 6) sont aptes à donner aux glissières (1A, 1B) des inclinaisons sensiblement égales respectivement à 6,3 degrés, ou 4,3 degrés ou zéro degrés par rapport au plancher (2).

5. Cale de fixation de mise en oeuvre du procédé selon l'une quelconque des revendications 1 à 4, **caractérisée en ce qu'**elle est constituée d'une pièce métallique ayant sensiblement la forme d'un U dont les extrémités libres des deux branches du U sont pliées vers l'extérieur du U dans des directions opposées, pour former respectivement deux pattes (7A, 7B) destinées à être fixées sur l'élément de glissière fixe (1A), la base du U formé par la cale (5, 6) étant fixée sur l'élément de structure (2, 3, 4) du plancher du véhicule.

6. Cale de fixation selon la revendication 5 **caractérisé en ce que** la base du U formé par la cale de fixation (5, 6) comporte un orifice (8) prévu pour le passage de la vis (10) d'un ensemble vis (10)-écrou (11) de fixation sur l'élément de structure (3, 4) du plancher, les deux pattes (7A, 7B) formées par les extrémités pliées de la cale (5, 6) étant soudées sur l'élément de glissière fixe (1A).

## Claims

1. Method of fixing seat tracks (1A, 1B) on a structural element (2, 3, 4) of the floor of a motor vehicle, consisting in using at least one fixing mount or foot (5, 6) fixed on the one hand to the fixed part (1A) of the track and on the other hand to the structural element (2, 3, 4) of the floor, said method being **characterized in that** it involves selecting, on the basis of the type of vehicle and/or on the basis of the structure of the vehicle floor (2), feet (5, 6) which are shaped to keep the tracks (1A, 1B) at a defined inclination relative to the floor (2) in a direction parallel to the longitudinal axes of the tracks, the inclination being ergonomically adapted to the type of vehicle.

2. Method of fixing seat tracks (1A, 1B) according to Claim 1, **characterized in that** at least one fixing foot (5, 6) is used on each track (1A, 1B), each foot (5, 6) being located approximately at one of the ends of the fixed part (1A) of the track.

3. Method of fixing seat tracks (1A, 1B) according to Claim 1 or 2, **characterized in that**, for different types of vehicles having essentially identical floor structures (2, 3, 4), fixing feet (5, 6) are selected from multiple types of feet (5, 6) each able to give the tracks (1A, 1B) a different inclination relative to the floor (2).

4. Method of fixing seat tracks (1A, 1B) according to Claim 3, **characterized in that** the different types of feet (5, 6) are each able to give the tracks (1A, 1B) different inclinations of approximately 6.3 degrees, or 4.3 degrees or zero degrees relative to the floor (2).

5. Fixing foot for carrying out the method according to any one of Claims 1 to 4, **characterized in that** it consists of a metal component in the general shape of a U, in which the free ends of the two arms of the U are bent out away from the U in opposite directions, to form two lugs (7A, 7B) for fixing to the fixed track element (1A), while the base of the U formed by the foot (5, 6) is fixed to the structural element (2, 3, 4) of the floor of the vehicle.

6. Fixing foot according to Claim 5, **characterized in that** the base of the U formed by the fixing foot (5, 6) contains a hole (8) for inserting the bolt (10) of a bolt (10) and nut (11) assembly for fixing it to the structural element (3, 4) of the floor, the two lugs (7A, 7B) formed by the bent ends of the foot (5, 6) being welded to the fixed track element (1A) .

## Patentansprüche

1. Verfahren zur Befestigung von Sitzgleitschienen (1A, 1B) an einem Strukturelement (2, 3, 4) des Bodens eines Kraftfahrzeugs, das darin besteht, mindestens einen Befestigungsbeschlag oder eine Befestigungsschelle (5, 6) zu verwenden, die einerseits am ortsfesten Teil (1A) der Gleitschiene und andererseits am Strukturelement (2, 3, 4) des Bodens befestigt ist, **dadurch gekennzeichnet, dass** in Abhängigkeit vom Typ des Fahrzeugs und/oder in Abhängigkeit von der Struktur von dessen Boden (2) Schellen (5, 6) gewählt werden, die so gestaltet sind, dass sie die Gleitschienen (1A, 1B) mit einer bestimmten Neigung bezüglich des Bodens (2) in einer Richtung parallel zu den Längsachsen der Gleitschienen halten, wobei die Neigung ergonomisch an den Typ des Fahrzeugs angepasst ist.

2. Verfahren zur Befestigung von Sitzgleitschienen (1A, 1B) nach Anspruch 1, **dadurch gekennzeichnet, dass** mindestens eine Befestigungsschelle (5, 6) pro Gleitschiene (1A, 1B) verwendet wird, wobei jede Schelle (5, 6) sich im Wesentlichen in Höhe eines der Enden des ortsfesten Teils (1A) der Gleitschiene befindet.

3. Verfahren zur Befestigung von Sitzgleitschienen (1A, 1B) nach Anspruch 1 oder 2, **dadurch gekennzeichnet, dass** für unterschiedliche Fahrzeugtypen, die im Wesentlichen gleiche Bodenstrukturen (2, 3, 4) haben, Befestigungsschellen (5, 6) gewählt werden, die aus einer Vielzahl von Schellentypen (5, 6) ausgewählt werden, die jeweils in der Lage sind, den Gleitschienen (1A, 1B) unterschiedliche Neigungen bezüglich des Bodens (2) zu verleihen.

4. Verfahren zur Befestigung von Sitzgleitschienen (1A, 1B) nach Anspruch 3, **dadurch gekennzeichnet, dass** die verschiedenen Typen von Schellen (5, 6) in der Lage sind, den Gleitschienen (1A, 1B) Neigungen zu verleihen, die jeweils gleich 6,3 Grad, oder 4,3 Grad oder Null Grad bezüglich des Bodens (2) betragen.

5. Befestigungsschelle zur Anwendung des Verfahrens nach einem der Ansprüche 1 bis 4, **dadurch gekennzeichnet, dass** sie aus einem Metallbauteil besteht, das im Wesentlichen die Form eines U hat, dessen freie Enden der zwei Schenkel des U nach außerhalb des U in entgegengesetzte Richtungen umgebogen sind, um zwei Laschen (7A, 7B) zu bilden, die dazu bestimmt sind, am ortsfesten Gleitschienenelement (1A) befestigt zu werden, wobei die Basis des von der Schelle (5, 6) gebildeten U am Strukturelement (2, 3, 4) des Bodens des Fahrzeugs befestigt ist.

6. Befestigungsschelle nach Anspruch 5, **dadurch gekennzeichnet, dass** die Basis des von der Befestigungsschelle (5, 6) gebildeten U eine Öffnung (8) aufweist, die für den Durchgang der Schraube (10) einer Einheit aus Schraube (10) und Mutter (11) zur Befestigung am Strukturelement (3, 4) des Bodens vorgesehen ist, wobei die zwei von den umgebogenen Enden der Schelle (5, 6) gebildeten Laschen (7A, 7B) auf das ortsfeste Gleitschienenelement (1A) geschweißt sind.
